(19) Europäisches Patentamt
European Patent Office
Office européen des brevets

(11) **EP 4 580 206 A1**

(12) **EUROPEAN PATENT APPLICATION**

(43) Date of publication:
02.07.2025 Bulletin 2025/27

(21) Application number: 23220635.9

(22) Date of filing: 28.12.2023

(51) International Patent Classification (IPC):
*H04N 23/745* (2023.01)    *H04N 25/47* (2023.01)

(52) Cooperative Patent Classification (CPC):
H04N 25/47; H04N 23/745

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Prophesee**
75012 Paris (FR)

(72) Inventors:
• **BURY, Serge**
  **78800 HOUILLES (FR)**
• **SCHWAMBACH, Vitor**
  **38000 GRENOBLE (FR)**
• **JOUBERT, Damien**
  **76100 ROUEN (FR)**

(74) Representative: **de Jong, Jean Jacques et al**
**Omnipat**
**610 Chemin de Fabrègues**
**13510 Éguilles (FR)**

(54) **FLICKER FILTERING METHOD FOR AN EVENT-BASED SENSOR, CAPABLE OF HANDLING MULTIPLE FLICKER SOURCES**

(57)    A method for filtering flicker in events produced by an event-based vision sensor is disclosed, comprising the steps of: a) creating multiple flicker clusters for an array of pixels, wherein each cluster is assigned with a distinct flicker period (TI, T2, T3) and a margin (mtl, mt2, mt3) around the flicker period; b) analyzing a sequence of events produced by a pixel of the array; c) measuring a period (T) in the sequence of events; d) comparing the measured period with the flicker periods of the clusters; e) assigning the pixel to a matching cluster for which the measured period falls within the margin (mt2) defined for the matching cluster's flicker period (T2); and f) filtering subsequent events produced by pixels assigned to clusters. A learning phase may include shifting the flicker period (T2) of the matching cluster towards the measured period (T) by a period step; and reducing the margin (mt2) of the matching cluster by a margin step. If the measured period does not satisfy any comparison, the learning phase may include increasing by a step the margins of clusters that have no pixels assigned to them.

Fig 3A

EP 4 580 206 A1

**(Cont. next page)**

Fig 3B

T1        mt2'    T2'    T3

## Description

### Technical Field

The present disclosure relates to filtering events created by flicker in an event stream produced by an event-based vision sensor.

### Background

When a scene observed by an event-based camera contains flickering light sources, the camera may produce a significant number of events only caused by the flicker intensity variations, which carry no useful information, such as motion information. Flicker filtering techniques are known that can handle a single flickering frequency.

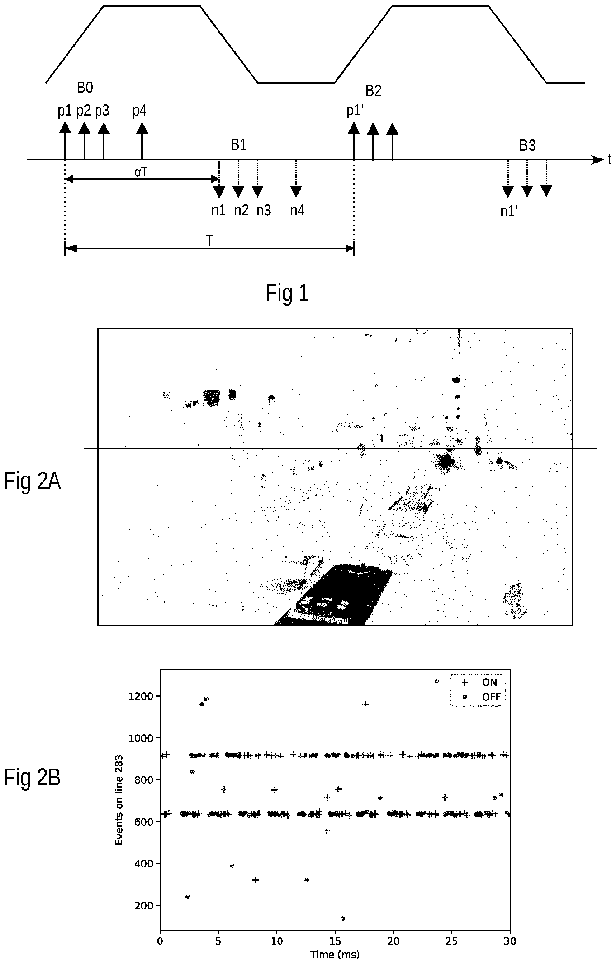

Figure 1 is a time diagram illustrating an exemplary succession of events produced by a pixel in response to a flicker light profile, such as disclosed in patent US11303804.

As shown at the top of Figure 1, the light profile seen by the pixel includes a frequency pattern which has alternating rising and falling edges with a periodicity of T. At the beginning, when the luminance increases by a quantity equal to an activation threshold, a positive polarity event p1 is generated by the pixel. With the increase of the luminance in the rising edge, subsequent events p2, p3 with the same positive polarity are generated each time the luminance further increases by the activation threshold. These events form a burst denoted as B0.

When the falling edge starts, the luminance decreases and gives rise to another burst B1 of events of opposite, negative polarity n1, n2, n3. Further rising and falling edges in the luminance sensed by the pixel produce other bursts of positive spikes, such as B2, and other bursts of negative spikes, such as B3.

The falling edge starts a time $\alpha T$ after the positive edge, where $\alpha$ denotes the duty cycle of the flicker profile, which is not necessarily equal to 0.5. The time $\alpha T$ is also called "active time".

A common target of the filtering techniques is to remove, for each pixel, each burst of events B0-B3 triggered by a rising or falling edge of the flicker light profile, while preserving events that occur between the edges, such as events p4 and n4 shown in Figure 1.

The filtering method disclosed in the above mentioned patent assumes the flicker period T is constant, so it does not adapt well to a varying flicker period.

Patent application EP4294002 discloses a PLL-based flicker filtering technique that dynamically adjusts to changes in the flicker period in an observed scene.

Known flicker filtering techniques find limitations when a scene contains multiple flicker sources having differing characteristics, such as streetlamps flickering at the mains frequency, LED lamps (for instance vehicle headlights) that use pulse-width modulation to adjust their intensity, display screens, smartphone displays, etc., that have frequencies commonly ranging from 100 Hz to 5 KHz.

### Summary

A method for filtering flicker in events produced by an event-based vision sensor is generally disclosed, comprising the steps of: a) creating multiple flicker clusters for an array of pixels, wherein each cluster is assigned with a distinct flicker period and a margin around the flicker period; b) analyzing a sequence of events produced by a pixel of the array; c) measuring a period in the sequence of events; d) comparing the measured period with the flicker periods of the clusters; e) assigning the pixel to a matching cluster for which the measured period falls within the margin defined for the matching cluster's flicker period; and f) filtering subsequent events produced by pixels assigned to clusters. A learning phase may include shifting the flicker period of the matching cluster towards the measured period by a period step; and reducing the margin of the matching cluster by a margin step. If the measured period does not satisfy any comparison, the learning phase may include increasing by a step the margins of clusters that have no pixels assigned to them.

Each cluster may be further assigned with an average event burst width, the method comprising the following further steps for the analyzed events: g) comparing the timestamps of consecutive events of same polarity at the beginning of the measured period to a first sum of the average burst width and the timestamp of the beginning of the measured period; and in step f) removing the events whose timestamps are smaller than the first sum.

Each cluster may be further assigned with an active time interval representing the average time between a flicker edge at the beginning of the measured period and a subsequent flicker edge, the method comprising the following further steps for the analyzed events: h) comparing the timestamps of consecutive events of same polarity at the end of the active time interval to a second sum of: i) the average burst width, ii) the active time interval, and iii) the timestamp of the beginning of the measured period; and in step f) removing the events whose timestamps are smaller than the second sum.

The method may comprise, in step g), updating the matching cluster's average event burst width with the timestamps of the consecutive events of same polarity.

The method may comprise, in step h), updating an average value of the matching cluster's active time interval with a time elapsed between the beginning of the measured period and the first of the consecutive events at the end of the active time interval.

The method may comprise, in step c), measuring the period as the time elapsed between a first event transition of a first direction and a consecutive event transition of the first direction.

The method may comprise, in step f), filtering only events produced by pixels assigned to clusters matching a flickering criterion.

The flickering criterion may be that the margin of a cluster is below a threshold.

The flickering criterion may be that an average event burst width measured for events produced by the pixels of a cluster is below a threshold.

**Brief Description of the Drawings**

Embodiments will be exposed in the following description provided for exemplary purposes only, in relation to the appended drawings, in which:

Figure 1, previously described, is a time diagram illustrating an exemplary succession of events produced by an event-based pixel in response to a flicker light profile;

Figures 2A and 2B illustrate an exemplary scene containing multiple flicker sources and a temporal representation of events occurring in pixels on a horizontal line of the image of figure 1A;

Figures 3A and 3B illustrate exemplary matching and training steps in a first situation of an adaptive flicker filtering method according to an embodiment;

Figures 4A and 4B illustrate exemplary matching and training steps in a second situation;

Figure 5 illustrates a convergence of frequencies and margins of multiple flicker clusters defined for a scene; and

Figure 6 is a time diagram illustrating an event filtering step.

**Detailed Description**

Figure 2A graphically illustrates events captured in a scene viewed by an event-based camera. The scene is a street at night including several sources of flicker, such as streetlamps and vehicle LED headlights. Positive or ON events are shown as black dots, and negative or OFF events are shown as gray dots. A horizontal line across the scene illustrates a row of pixels being analyzed.

Actually, to improve robustness, the pixels may be grouped in blocks, for example squares of 4x4 pixels, and the analysis is performed on a row of such blocks, where an event in any pixel of a block is accounted for as a block event.

Figure 2B illustrates a temporal event occurrence of each block in the line marked in figure 2A. The blocks are ordered along a vertical axis and elapsed time is represented on a horizontal axis. The positive events are shown with "+" signs, and the negative events are shown by black dots.

It can be observed that some blocks exhibit a periodic pattern in their positive and negative events, and that the periods are not the same for different blocks, revealing the presence of multiple flicker sources of different frequencies. The techniques disclosed below are capable of handling multiple flicker sources of different frequencies, and even automatically adjust to dynamically changing flicker sources.

In summary, a set of so-called flicker clusters is created, each with a different flicker period $T_i$ and a tolerance margin $mt_i$ around the period. The periods that are selected for the clusters may be determined by a preliminary Fourier analysis of the event stream produced by the observed scene, or be commonly known flicker periods, or simply evenly distributed periods between minimum and maximum values, where the maximum value is usually the half period of the mains network (10 ms for a 50 Hz network).

Each cluster, initially empty, is subsequently "filled" with pixels that produce measured periods matching the cluster's period and margin parameters as the event stream is being analyzed.

Each cluster that is filled in this way may be trained online with the subsequent events produced by the pixels of the cluster. The clusters may initially have inaccurate periods and large margins, which are then fine-tuned online with the results of the analyses, such that the margins are progressively reduced, and the periods are progressively shifted when applicable, to better match the periodic patterns of the events produced by the pixels of the clusters.

On the other hand, if no matches are found, the online training may progressively increase the margins of the clusters so that some clusters start matching measured periods. Such a situation may occur if there is initially no flicker in the scene, or if an eventual flicker source has a frequency not corresponding to any of the clusters.

In the end, a certain number of pixels will belong to respective clusters, and the clusters will have margins and periods that have been fine-tuned by online training. However, not all clusters will be representative of flicker, especially those having such large margins that they match pixels having pseudo-periodic characteristics that do not correspond to flicker. Hence, only those clusters satisfying a flicker criterion will be used for filtering.

A simple flicker criterion may be that the margins of the clusters are below a threshold. Other parameters or states of the clusters that may be followed, such as the period, an average burst width, an averaged pixel position, the number of associated pixels, or an activity of the cluster can be used to discriminate whether the cluster is observing flicker or not. Flickering clusters may converge throughout the online training to strong or weak, stationary or moving flicker sources, etc. The states of the clusters may also be used to detect and classify the flicker sources and to decide whether the events must be filtered or not depending on the application.

When the frequency of a cluster converges to within a range of commonly observed flicker sources, such as [5kHz, 100 Hz], the cluster may be considered as a flickering cluster. This way, clusters converging to lower frequencies, for example caused by moving objects, will not be filtered.

The events generated by a flicker signal are often gathered in bursts as illustrated in Figure 1, B0-B3. The median absolute deviation MAD of the timestamps of the bursts is an estimator of the burst width. When the MAD is smaller than 30% of the period, the cluster is likely to observe flicker. On the other hand, when the MAD is closer to 50% of the period, then the cluster is likely to correspond to a moving object.

The position of the cluster may be determined using the mean and standard deviation of the positions of the pixels of the cluster. Global illumination in a scene may be detected by monitoring the number of pixels belonging to a cluster, and a moving flicker source (such as car headlights) may also be detected by monitoring the average pixel position of a cluster in the scene. For example, when the position of the cluster changes by more than 50 pixels per second, the cluster is considered as a moving cluster. When more than 20% of the pixels of the sensor array match the same cluster, the cluster is considered as a strong flicker source.

Because flicker generates events periodically, the activity of the cluster, defined as the number of events in the cluster per time interval, does not in practice go below a certain threshold, for example 10k events per second, otherwise the cluster is not observing flicker.

The pixels contribute locally, by measuring the periods, to updating the clusters, which are global representations of the pixels. The accumulated states of the clusters may be used to detect whether a cluster is observing flicker or not. When flickering is detected, the association between a local pixel and a global cluster is used, as detailed hereinafter, to filter the flicker events using the states of the cluster, such as the estimated burst length or the period.

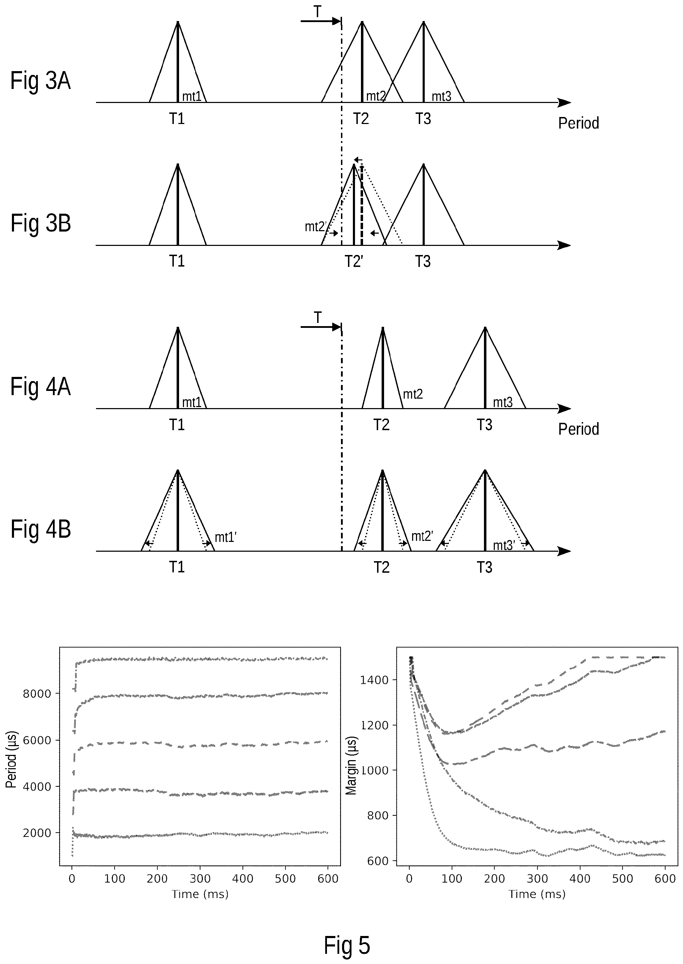

Figures 3A and 3B are graphs schematically illustrating a situation where a currently measured period for a pixel matches a cluster.

In Figure 3A, three clusters are defined, with respective periods $T_1$, $T_2$, $T_3$ and respective tolerance margins $mt_1$, $mt_2$, $mt_3$. Each period is shown as a vertical bar on a period value axis, and the corresponding margins are shown as triangles centered on the periods and having bases with widths corresponding to the margins.

An analysis of a sequence of events generated by a current pixel produces a measured period T. Each period T may be measured as the time elapsed between two consecutive transitions of same direction in the event stream produced by the current pixel. Referring to Figure 1, using for instance the OFF/ON transitions, the elapsed time is measured between a first transition at event p1 and a subsequent event of positive polarity p1' that succeeds an event of negative polarity n4. The event p1 is assumed to be the beginning of a rising edge of a flicker profile, and the event p1' is supposed to be the beginning of the next rising edge. The elapsed time T may be calculated as the difference between the timestamps of the events p1' and p1.

In Figure 3A, the period T is compared to the periods and margins of the clusters, and a match is found for period $T_2$ with margin $mt_2$. The corresponding pixel is assigned to the cluster, or the assignment is confirmed if the pixel was already assigned to the cluster.

In Figure 3B, the cluster states may be fine-tuned with the new current value T. In the example, value T does not exactly correspond to the period $T_2$ of the cluster, so the period of the cluster $T_2$ is shifted a step towards value T. The step may be a constant value smaller than the difference $T - T_2$. Preferably, $T_2$ is modified as a moving average, for instance an exponential moving average, i.e.:

$$T_2(\text{new}) = (1 - \varepsilon)T_2 + \varepsilon T,$$

where $0 < \varepsilon < 1$.

An exemplary value for epsilon is $10^{-5}$.

The margin $mt_2$ is preferably also adjusted by decreasing it by a step $\gamma$ that may be constant or a function of the current value of the margin or the period. In theory, the margin may decrease down to the jitter amplitude of the period of the flicker source.

The operation of Figure 3B is an online training phase that is carried out for each new measured period matching the cluster states. After a certain number of events, the periods of the multiple clusters will have converged toward the effective flicker periods of the respective sources in the scene, and their margins will be tighter.

With the tighter margin in a cluster, more measured periods from the pixels of the cluster may not match the cluster states. The corresponding pairs of events may then reliably be considered as not related to flicker and should not be filtered.

Figures 4A and 4B illustrate similar graphs as figures 3A and 3B, but in a situation where no match is found with the clusters.

In Figure 4A, the currently determined period T does not match any of the cluster states. Value T falls short of the margin $mt_2$ defined for the second cluster in this example. This may happen in an initial phase where a set of clusters has been defined arbitrarily, with periods evenly distributed across a large range. The situation may also happen when the flicker sources in the scene have changed.

In Figure 4B, in such a case, the margin of each cluster is increased by a step as part of the online training procedure. In other words, the clusters are "opened". A next value of T may still not match a cluster, so the margin increase is repeated, and so on, until new values T start matching a cluster. Then, the situation becomes that of Figures 3A and 3B, where there is possibly a match with the second cluster, and the period $T_2$ will start shifting towards the average value of successive periods T.

In the example of Figure 4B, where all the clusters are "empty", the margins of all the clusters are increased. In a situation where some clusters have pixels assigned to them, only the remaining "empty" clusters may be opened. The extent to which each cluster is opened may be the point at which the margins of adjacent clusters start overlapping.

The measurement of period T and the cluster matching is performed for each pixel to initially assign the pixels of the sensor array to available clusters and subsequently perform training. In principle, pixels that are not subject to flickering are not assigned to a cluster. However, in an initial phase, pixels that produce events with pseudo-periodic characteristics that are not related to flicker, but maybe to motion, may temporarily be assigned to clusters having large margins. If such clusters also capture other pixels that are subject to flicker, their margins will end up being reduced to exclude the pixels with pseudo-periodic behavior. However, if no true flicker sources are captured by such clusters, the clusters will remain with large margins and capture arbitrary pixels. Such clusters may be discriminated by setting a threshold for the margins, under which the clusters are categorized as flickering.

A pixel that belongs to a cluster may be regularly tested to confirm the ownership. If the periods measured for the pixel no longer match the cluster's states for a number of consecutive measures, the pixel may be removed from the cluster, and thus be considered as non-flickering. The pixel may then be captured by an adjacent cluster having a large margin, but that cluster will be considered as non-flickering because its margin exceeds the threshold.

Figure 5 illustrates measured period and margin evolutions for exemplary clusters defined for a real scene, corresponding to the street at night scene of figure 2A, having two flicker sources of different frequencies. Five clusters are initially defined with respective periods of 2, 4, 6, 8 and 10 ms. The margins are all initialized at $\pm 1.5$ ms, meaning the margins centered around the periods overlap by 1 ms. With the overlap, any pixel whose events follow a periodic pattern will initially by captured by at least one cluster.

The cluster period evolution is shown on the left. An abrupt rise in all the periods simply reflects a change from a previous setting. Each period remains substantially constant over the measurement time of 600 ms, meaning that some periods exactly match the existing flicker sources, and some periods have no matching flicker sources.

The evolution of the margins is shown on the right. All margins start by decreasing from 1.5 ms, but only those corresponding to the periods of 10 ms and 2 ms continue decreasing after 100 ms to stabilize between 600 and 800 $\mu$s. The margin corresponding to the period of 2 ms stabilizes faster, simply because five times more events are produced in the interval for the shorter flicker period.

The other margins, corresponding to the periods 4 to 8 ms, reach a minimum above 1000 $\mu$s, and rise back toward their initial values, meaning that the clusters initially captured some pixels producing pseudo-periodic events, maybe due to motion, which pixels were later removed from the clusters because they no longer produced periodic events. Those clusters, no longer having any pixels, started increasing their margins.

This graph reveals a margin threshold range, approximately 800 to 1000 $\mu$s, for discriminating the non-flickering clusters, i.e., those having a margin above the threshold. The step used for adjusting the margins is $\gamma = 15$ $\mu$s, as an example.

Since the clusters initially have overlapping margins, measured periods with values in the overlap region may cause the corresponding pixel to be assigned to both neighboring clusters. Over time, each cluster would progressively shift its period towards the average measured period, resulting in two clusters with similar states. In such a situation, one of the clusters may be deleted after updating the remaining cluster with an average of the states of both clusters.

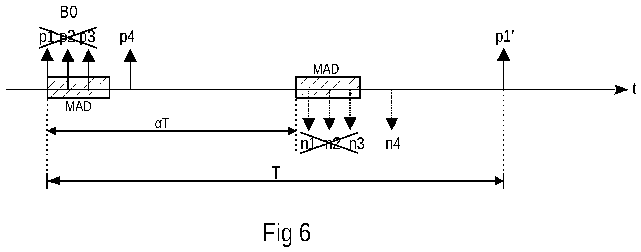

Figure 6 is a time diagram illustrating in more detail a filtering procedure that applies to clusters categorized as flickering. The diagram reproduces some of the exemplary elements of Figure 1, in particular an exemplary sequence of events p1-p4, n1-n4, occurring in a given pixel during a flicker period.

In order to define and train the clusters, as previously mentioned as an example, a period T is measured between two consecutive OFF/ON or positive transitions in the events, identified here by events p1 and p1'. These transitions are in principle each followed by a burst of positive events (p1-p3) caused by a flicker rising edge. Between the two positive transitions in period T, there is a negative transition, identified by event n1, followed by a burst of negative events (n1-n3) caused by the flicker falling edge. The negative transition occurs an active time $\alpha$T after the first positive transition, where $\alpha$ is the duty cycle of the flicker. The active times $\alpha$T may be measured and stored as a moving average for the cluster.

The events of each burst are to be removed from the event stream, and this should be done while keeping events outside the bursts, like p4 and n4. This may be achieved as follows.

Upon analyzing the depicted event sequence for measuring the period T, the timestamps of the consecutive positive polarity events following (and including) p1 are compared to an average burst width MAD added to the timestamp of event p1. Each such event having a timestamp smaller than the sum is removed from the event stream. As shown, positive event p4 fails the comparison and is kept.

A similar approach is adopted for the burst of negative events n1-n4 following the negative transition n1. Here, the event timestamps are compared to the average burst width MAD added to the active time $\alpha T$, added to the timestamp of event p1. As shown, negative event n4 fails the comparison and is kept.

Although the burst width could simply be added to the timestamp of event n1, better accuracy is obtained by using the active time $\alpha T$, which is averaged over multiple event sequences.

The average burst width noted MAD, in principle the flicker profile edge duration, may be the median absolute deviation of the timestamps of the events in each burst. In practice the MAD value may be stored for the cluster and updated as a moving average with the timestamps of all same polarity events following each event transition. So, in the example of Figure 6, the MAD would be updated based on events p1-p4, and updated again based on events n1-n4, so also including events p4 and n4 that were not considered as included in the bursts. Since it is not absolutely certain that events p4 and n4 do not reflect flicker, because they may indeed reflect a flicker profile that is changing, it is better to include them in an adaptive procedure. If they effectively do not correspond to flicker, they will be random events that do not affect the moving average value.

As an alternative, the positive and negative transitions may be assigned in the cluster with respective MAD values to account for a difference between the rise times and fall times of the flicker profile.

The measurement of the periods T has been described as based on the detection of same direction transitions in the event polarities. Other methods may be used, for instance such as disclosed in patent US11303804, based on the detection of inactivity intervals between consecutive events.

In some applications, all the events produced by the pixels of certain clusters, especially smaller clusters, may be bluntly removed from the event stream, avoiding the fine-grained but more complex filtering procedure of Figure 6.

For sake of clarity, the filtering methods have been described essentially referring to individual pixels assigned to the clusters. As previously evoked, to increase robustness, blocks of adjacent pixels may be used instead of single pixels. Then, as soon as a period measured for any individual pixel in a block matches the states of a cluster, the whole block is assigned to the cluster, and the events of each pixel of the block contribute to the states of the cluster.

**Claims**

1. A method for filtering flicker in events produced by an event-based vision sensor, comprising the following steps:

    a) creating multiple flicker clusters for an array of pixels, wherein each cluster is assigned with a distinct flicker period ($T_1$, $T_2$, $T_3$) and a margin ($mt_1$, $mt_2$, $mt_3$) around the flicker period;
    b) analyzing a sequence of events produced by a pixel of the array;
    c) measuring a period (T) in the sequence of events;
    d) comparing the measured period with the flicker periods of the clusters;
    e) assigning the pixel to a matching cluster for which the measured period falls within the margin ($mt_2$) defined for the matching cluster's flicker period ($T_2$); and
    f) filtering subsequent events produced by pixels assigned to clusters.

2. The method of claim 1, comprising the following steps in step e):

    shifting the flicker period ($T_2$) of the matching cluster towards the measured period (T) by a period step; and
    reducing the margin ($mt_2$) of the matching cluster by a margin step.

3. The method of claim 2, comprising, in step d), if the measured period does not satisfy any comparison, increasing by a step the margins of clusters that have no pixels assigned to them.

4. The method of claim 1, wherein each cluster is further assigned with an average event burst width (MAD), the method comprising the following further steps for the analyzed events:

    g) comparing the timestamps of consecutive events of same polarity (p1-p4) at the beginning of the measured period to a first sum of the average burst width and the timestamp of the beginning (p1) of the measured period; and
    in step f) removing the events whose timestamps are smaller than the first sum.

5. The method of claim 4, wherein each cluster is further assigned with an active time interval ($\alpha T$) representing the average time between a flicker edge at the beginning of the measured period and a subsequent flicker edge, the method comprising the following further steps for the analyzed events:

    h) comparing the timestamps of consecutive events of same polarity (n1-n4) at the end of the active time interval to a second sum of: i) the average burst width, ii) the active time interval, and iii) the timestamp of the beginning (p1) of the measured period; and
    in step f) removing the events whose timestamps are smaller than the second sum.

6. The method of claim 4, comprising, in step g), updating the matching cluster's average event burst width with the timestamps of the consecutive events of same polarity.

7. The method of claim 5, comprising, in step h), updating an average value of the matching cluster's active time interval with a time elapsed between the beginning of the measured period and the first of the consecutive events at the end of the active time interval.

8. The method of claim 1, comprising, in step c), measuring the period as the time elapsed between a first event transition of a first direction (OFF/ON) and a consecutive event transition of the first direction.

9. The method of claim 3, comprising, in step f), filtering only events produced by pixels assigned to clusters matching a flickering criterion.

10. The method of claim 9, wherein the flickering criterion is that the margin of a cluster is below a threshold.

11. The method of claim 9, wherein the flickering criterion is that an average event burst width (MAD) measured for events produced by the pixels of a cluster is below a threshold.

Fig 1

Fig 2A

Fig 2B

Fig 3A

Fig 3B

Fig 4A

Fig 4B

Fig 5

Fig 6

Europäisches
Patentamt

European
Patent Office

Office européen
des brevets

# EUROPEAN SEARCH REPORT

**Application Number**

EP 23 22 0635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 294 002 A1 (PROPHESEE SA [FR]) 20 December 2023 (2023-12-20) | 1,4-8 | INV. H04N23/745 H04N25/47 |
| A | * paragraphs [0001], [0014] - [0018], [0023], [0031] - [0044], [0075] - [0125]; figures 6-7 * | 2,3,9-11 | |
| | ----- | | |

**TECHNICAL FIELDS SEARCHED (IPC)**

H04N

The present search report has been drawn up for all claims

| Place of search | Date of completion of the search | Examiner |
|---|---|---|
| The Hague | 21 May 2024 | Mao, Pauline |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 580 206 A1**

## ANNEX TO THE EUROPEAN SEARCH REPORT
## ON EUROPEAN PATENT APPLICATION NO.

EP 23 22 0635

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2024

| Patent document cited in search report | | Publication date | Patent family member(s) | | Publication date |
|---|---|---|---|---|---|
| EP 4294002 | A1 | 20-12-2023 | CN | 117255263 A | 19-12-2023 |
| | | | EP | 4294002 A1 | 20-12-2023 |
| | | | JP | 2023184501 A | 28-12-2023 |
| | | | KR | 20230173610 A | 27-12-2023 |
| | | | US | 2023412930 A1 | 21-12-2023 |

EPO FORM P0459

For more details about this annex : see Official Journal of the European Patent Office, No. 12/82

13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11303804 B

- EP 4294002 A